# EUROPÄISCHE PATENTANMELDUNG

(11) **EP 1 517 282 A1**
(43) Veröffentlichungstag der Anmeldung: **23.03.2005**
(21) Anmeldenummer: 04020022.2
(22) Anmeldetag: 24.08.2004
(51) Int. Cl.: G09B 23/28, G09B 23/30

(54) **Trainingsmodell zur perkutanen Behandlung eines Organs, insbesondere einer Niere**

(30) Priorität: 25.08.2003 DE 20313207 U
(71) Anmelder: Strohmaier, Walter Ludwig, Prof. Dr. Dr., 96450 Coburg (DE); Giese, Andreas, 96279 Weidhausen-Trübenbach (DE)
(72) Erfinder: Strohmaier, Walter Ludwig, Prof. Dr. Dr., 96450 Coburg (DE); Giese, Andreas, 96279 Weidhausen-Trübenbach (DE)
(74) Vertreter: Stoffregen, Hans-Herbert, Dr. Dipl.-Phys.

(57) **Zusammenfassung**

Die Erfindung bezieht sich auf ein Trainingsmodell (10) zur perkutanen Behandlung von Organen (14, 16). Um ein Trainingsmodell zur perkutanen Organchirurgie zur Verfügung zu steifen, welches die tatsächlichen Bedingungen einer perkutanen Organchirurgie möglichst exakt nachbildet und einfach herzustellen ist, wird vorgeschlagen, dass ein oder mehrere präparierte Organe (14, 16) auf einer Grundplatte (12) anatomisch positioniert und in einer ein menschliches Gewebe nachbildenden Vergussmasse (14) eingebettet sind.

## Beschreibung

Die Erfindung bezieht sich auf ein Trainingsmodell zur perkutanen Behandlung eines Organs, insbesondere einer Niere.

In jüngster Zeit besteht ein Trend dahingehend, Eingriffe in den menschlichen Körper durch nicht oder nur minimal in den menschlichen Körper eingreifende Verfahren durchzuführen. Eine breite Akzeptanz hat dabei das Verfahren zur Behandlung von Nierensteinen mittels Extrakorporalschockwellenliturtrepsie (ESWL-Verfahren) erlangt. Hinsichtlich größerer Nierensteine ist das ESWL-Verfahren jedoch weniger erfolgreich. Daher werden solche Fälle mit einem minimal eingreifenden Verfahren wie beispielsweise der perkutanen Nierenchirurgie behandelt. Da das ESWL-Verfahren die perkutane Nierenchirurgie während der 80er und 90er Jahre des letzten Jahrhunderts in vielen urologischen Abteilungen verdrängt hat, haben jüngere Urologen keine ausreichende Erfahrung in diesen Techniken. Um jedoch perkutane Verfahren effektiv und sicher durchführen zu können, ist eine verbesserte Ausbildung dringend notwendig.

Um die sichere Technik der perkutanen Nierenchirurgie zu erlernen, ist es sinnvoll, diese an einem Modell zu trainieren. Ein aus dem Stand der Technik bekanntes Modell (Limbs & Things Ltd., Bristol, UK) bietet die Möglichkeit, das Hohlraumsystem einer Niere radiologisch zu punktieren. Da das Modell aus einem Kunststoffmaterial hergestellt ist, bildet dieses Modell die Realität nur unzureichend wieder. Dies ist jedoch zum Erlernen einer sicheren Technik notwendig.

Des Weiteren erlaubt das bekannte Modell nicht die Anwendung von Ultraschalltechnik zur Punktierung und Zugriff des Hohlraumsystems und es ist nicht möglich, das Modell zu erweitern und die perkutane Nierenchirurgie zu trainieren.

In der GB-A-23 28 775 ist ein Simulator für ein Körperorgan beschrieben. Der Simulator umfasst die Nachbildung eines Körperorgans, das gleiche radiographische Dichten und akustische Eigenschaften eines realen Körpers aufweist. Das nachgebildete Körperorgan kann z. B. ein Nierensystem sein, das eine äußere Oberfläche, innere Röhren aus Silikongummi oder Latex sowie ein Gewebe umfasst, das aus einem Silikongel oder einer modifizierten stabilisierten Gelatine besteht.

Die DE-T-698 04 793 bezieht sich auf ein klinisches und/oder chirurgisches Trainingsgerät. Das Trainingsgerät umfasst ein Gehäuse in Gestalt eines geschlossenen Behälters, der in Größe und Form einer Struktur wie zum Beispiel einer menschliche Bauchhöhle ähnelt. In dem Gehäuse werden Nachbildungen von Organen angeordnet, die unter Verwendung von beispielsweise Latexgummi, Latexschaumgummi, raumtemperaturvulkanisiertes (RTV) Kondensationssilikon o. a. hergestellt werden. Die nachgebildeten Organe sind in dem Gehäuse angeordnet, ohne dass eine Vergussmasse vorgesehen ist.

Ein Trainingsmodell zur perkutanen endoskopischen Gastronomie ist der US-A-5,518,406 zu entnehmen. Das Modell umfasst zwei oder mehrere zusammen verbundene Schichten, wobei die äußere Schicht in etwa die Struktur der menschlichen Haut wiedergibt. Die zweite Schicht entspricht in etwa dem Widerstand des subkutanen Gewebes der menschlichen Bauchwand. Eine dritte Schicht kann zugefügt werden, welche den Widerstand der menschlichen Magenwand wiedergibt.

In der US-A-4,646,334 ist ein Verfahren und ein System zur Ausführung eines computertomographischen Scans von Modulen in einer Lunge eines menschlichen oder tierischen Lebewesens beschrieben. Dieses umfasst ein Element, welches einen 15 bis 40 mm dicken Querschnittsbereich des Lebewesens simuliert, wobei die die Haut simulierenden Abschnitte des Elementes aus Materialien konstruiert sind, welche radiographische Dichten aufweisen, die im Wesentlichen mit denen der entsprechenden Haut in dem simulierten Querschnittsbereich des Lebewesens übereinstimmen und Hohlräume enthalten, die in Größe und Form die Lungenhohlräume in dem Querschnittsbereich simulieren.

In der WO-A-94/06109 wird ein medizinisches Trainingsgerät für die Hohlorganendoskopie beschrieben, welches mindestens ein einen Hohlraum enthaltendes Kompartiment enthält, welches abgedichtet bzw. abdichtbar ist.

Ferner ist aus der WO-A-01/78039 ein Verfahren und ein System zur Simulation des minimalinvasiven medizinischen Verfahrens der urologischen Endoskopie.

Davon ausgehend liegt der vorliegenden Erfindung das Problem zu Grunde, ein Trainingsmodell zur perkutanen Organchirurgie zur Verfügung zu stellen, welches die tatsächlichen Bedingungen einer perkutanen Organchirurgie möglichst exakt nachbildet und einfach herzustellen ist.

Das Problem wird erfindungsgemäß im Wesentlichen dadurch gelöst, dass ein oder mehrere präparierte Organe auf einer Grundplatte anatomisch positioniert und in einer Vergussmasse eingebettet sind. Bei der Vergussmasse handelt es sich vorzugsweise um Silikon, welches die Eigenschaften des menschlichen Gewebes nachbildet. Das Traniningsmodell zeichnet sich insbesondere dadurch aus, dass durch die Verwendung von Silikon eine sehr realistische Nachbildung der klinischen Situation erreicht wird.

Eine besonders bevorzugte Ausführungsform des Trainingsmodells zeichnet sich dadurch aus, dass die präparierten und auf der Grundplatte anatomisch positionierten Organe Nieren sind und dass von freigelegten und isolierten Ureteren der Nieren jeweils sich insbesondere dadurch aus, dass durch die Verwendung von Silikon eine sehr realistische Nachbildung der klinischen Situation erreicht wird.

Eine besonders bevorzugte Ausführungsform des Trainingsmodells zeichnet sich dadurch aus, dass die präparierten und auf der Grundplatte anatomisch positionierten Organe Nieren sind und dass von freigelegten und isolierten Ureteren der Nieren jeweils ein Katheter durch die Vergussmasse nach außen führt. Über die Katheter, welche als Ureteren-Katheter oder Flötenspitzkatheter ausgebildet sind, können Röntgenkontrastmittel oder andere Flüssigkeiten in die Nieren eingebracht werden.

Um einen realistischen Eindruck zu vermitteln, ist die Vergussmasse undurchsichtig ausgebildet. Das Trainingsmodell ist vorzugsweise quaderförmig ausgebildet, vorzugsweise mit einer Länge im Bereich von 40 - 60 cm, vorzugsweise 50 cm, einer Breite im Bereich von 20 - 40 cm, vorzugsweise von 30 cm, und einer Höhe im Bereich von 20 - 30 cm, vorzugsweise von 25 cm.

Dabei ist die Oberseite des Trainingsmodells als Punktionsfläche eben ausgebildet.

Vor dem Einbringen der Vergussmasse können bei Bedarf Nierensteine in die präparierte Niere eingebracht werden. Auch kann ein Hohlraumsystem wie Harnleiter bzw. Nierenbecken mit ca. 10 bis 15 ml Flüssigkeit gefüllt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern aus der nachfolgenden Beschreibung eines der Zeichnung zu entnehmenden bevorzugten Ausführungsbeispiels.

Es zeigen:
- Fig. 1: eine perspektivische Ansicht eines Trainingsmodells zur perkutanen Nierenchirurgie,

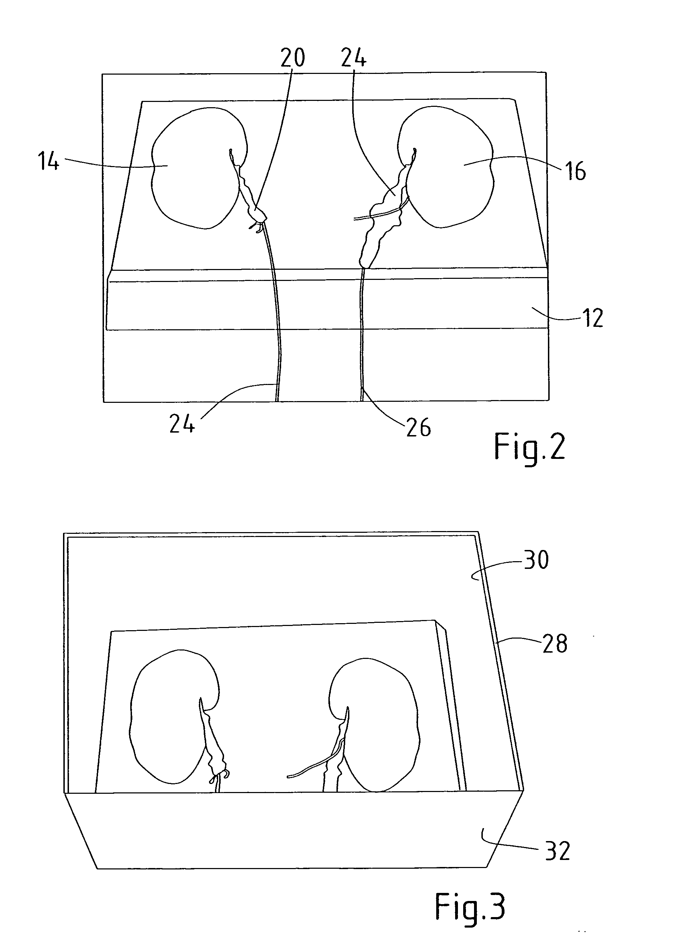

- Fig. 2: auf einer Grundplatte anatomisch positionierte und präparierte Nieren,
- Fig. 3: die Grundplatte mit den präparierten Nieren in einer Gussform
- Fig. 4: ein Ultraschallbild der in der Gussmasse eingebetteten Nieren,
- Fig. 5: eine in der Gussmasse eingebettete Niere mit einem Punktionskanal,
- Fig. 6: ein endoskopisches Bild des Nierenbeckens mit Führungsdraht, Steinen und Ultraschallsonde zur Steinzertrümmerung.

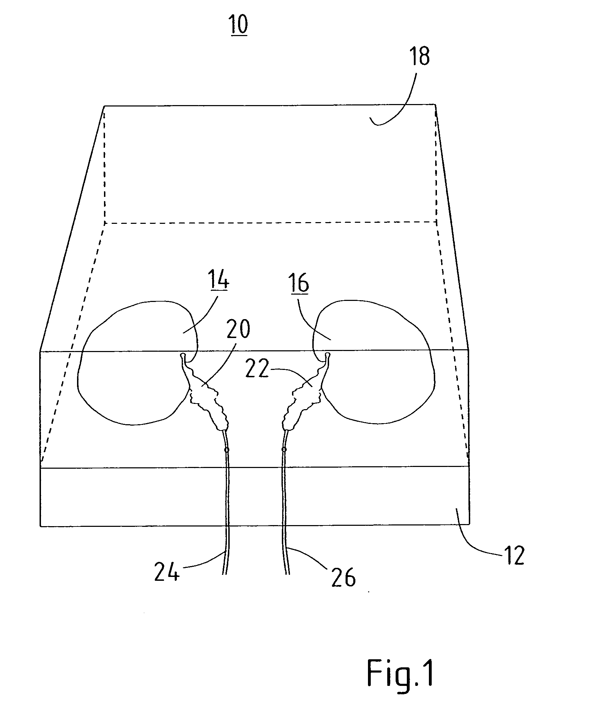

Fig. 1 zeigt in perspektivischer Ansicht ein Trainingsmodell 10 zur perkutanen Nierenchirurgie. Das Modell 10 besteht aus einer Grundplatte 12, auf der zwei präparierte Nieren 14, 16 anatomisch positioniert und in einer Gussmasse 18 eingebettet sind. Zur Herstellung des Modells 10 wird zunächst die Grundplatte 12 aus einer Gussmasse wie Silikon ausgeformt, so dass eine quaderförmige Grundplatte mit beispielsweise einer Breite von 40 cm, einer Länge von 30 cm und einer Höhe von 4 cm gebildet wird. Die angegebenen Werte sind rein beispielhaft und stellen keine Einschränkung des Erfindungsgedankens dar.

Die zu untersuchenden Nieren 14, 16, bei denen es sich beispielsweise um Schweinenieren handeln kann, werden zunächst präpariert und deren Harnleiter (Ureteren) 20, 22 werden freigelegt und isoliert. Bei Bedarf können Nierensteine (Konkremente) über den Harnleiter 20, 22 oder über ein Nierenbecken in die Niere 14, 16 eingebracht werden.

Anschließend wird jeweils ein Katheter 24, 26 in Form eines Ureterenkatheters oder eines Flötenspitzkatheters (6-8 Charr.) mit den Harnleitern verbunden. Ferner erfolgt ein Unterbinden des Ureters bei einliegenden Kathetern zur Fixierung des Katheters. Anschließend wird die Niere mit einer Kochsalzlösung (NaCl 0,9 %) oder Leitungswasser vorsichtig gespült. Dabei kann das aus Harnleiter bzw. Nierenbecken bestehende Hohlraumsystem mit ca. 10 - 15 ml Flüssigkeit gefüllt werden. Vor dem Einbringen der Grundplatte mit den darauf positionierten Nieren in eine Gussform ist die Unterbindungsstelle zwischen dem Katheter 24, 26 und dem Harnleiter 20, 24 auf Dichtigkeit zu prüfen ist. Anschließend kann die Flüssigkeit wieder entfernt werden und das Präparat abgetrocknet werden.

Schließlich wird die Grundplatte mit den darauf angeordneten Nieren 14, 16 und den damit verbundenen Kathetern 24, 26 in eine vorzugsweise quaderförmige Gussform 28 eingesetzt. Eine Innenwandung 30 der Gussform 28 ist vollständig mit einer Folie 32 abgedeckt. Um ein vollständiges Eingießen der Nieren 14, 16 sowie der Grundplatte 12 zu ermöglichen, sollte die Gussform 28 in ihren äußeren Abmessungen ca. 2 - 3 cm größer als die Grundplatte gewählt werden. In der Höhe sollte die Gussform ca. 12 - 15 cm höher sein als ein oberer Rand der Grundplatte 12.

Nachdem die Präparate nochmals anatomisch auf der Grundplatte positioniert wurden und der Verlauf der Harnleiter 20, 24 sowie der Katheter 24, 26 kontrolliert wurde, können die Katheter 24, 26 an der Gussform 28 fixiert werden.

Schließlich erfolgt ein Eingießen der Vergussmasse 18, wobei sowohl die Grundplatte 12 als auch die Nieren 14, 16 vollständig von der Gussmasse, für die vorzugsweise Silikon verwendet wird, eingeschlossen werden.

Nachdem die Gussmasse 18 nach ca. 2 - 3 Stunden ausgehärtet ist, kann das Modell 10 aus der Form 28 herausgenommen werden. Anschließend ist das Modell kühl zu lagern.

Bei der Gussmasse 18 handelt es sich vorzugsweise um eine undurchsichtige Silikonmasse, so dass die Nieren 14, 16 von außen nicht sichtbar sind.

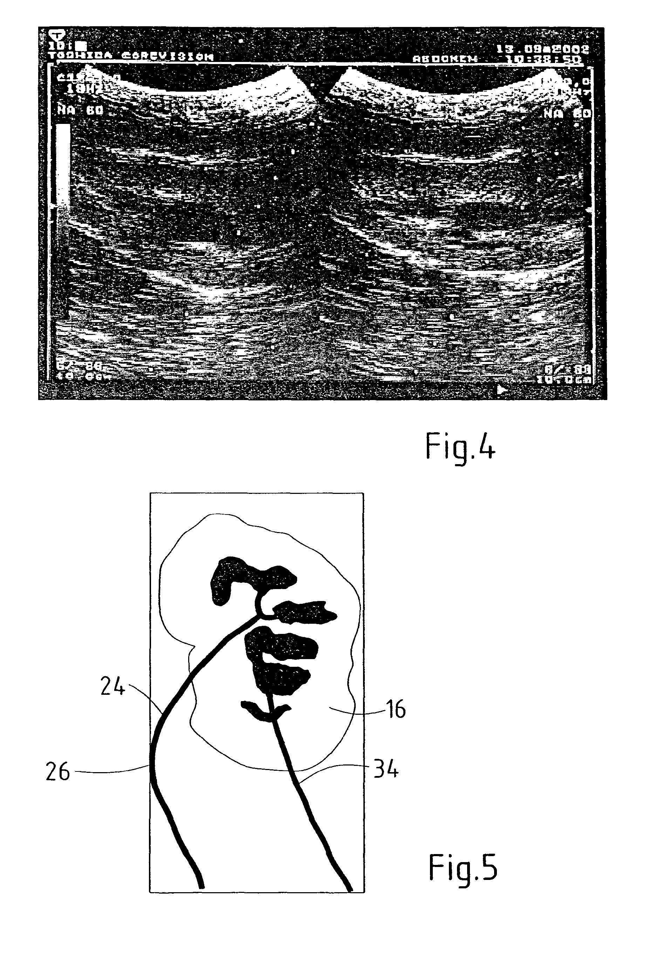

Die Nieren können jedoch mittels einer Ultraschallsonde graphisch dargestellt werden. Ein entsprechendes Bild ist in Fig. 4 dargestellt. Dabei können in der Niere existierende Nohlraumsysteme beispielsweise mit einem Röntgenkontrastmittel oder einer anderen Flüssigkeit über die aus dem Modell austretenden Katheter 24, 26 gefüllt werden.

Über die Punktionsnadel 34 wird ein Führungsdraht 36 in das Nierenbecken oder den Harnleiter eingeführt. Nach Entfernen der Punktionsnadel 34 kann der verbleibende Kanal mittels eines Koaxialdehners wie Trakthülse ausgedehnt werden. Nach der Ausdehnung (Dilatation) des Kanals mittels einer Trakthülse wird ein Endoskop (Pyeloskop) eingeführt.

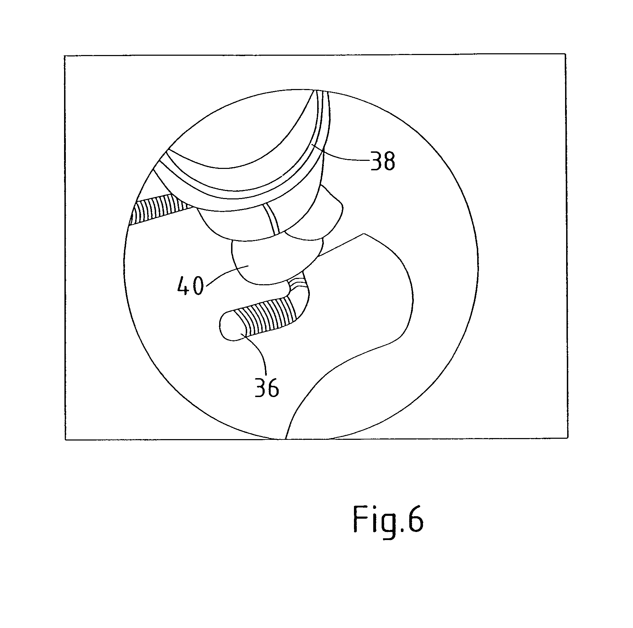

Fig. 6 zeigt ein entsprechendes endoskopisches Bild des Nierenbeckens mit Führungsdraht 36, Nierensteinen 40 und einer Ultraschallsonde 38 zur Steinzertrümmerung.

Für die Arbeit mit dem Trainingsmodell 10 werden medizinische Instrumente 34, 36, 38, wie sie aus dem klinischen Alltag bekannt sind, eingesetzt. Zum besseren Gleiten durch das Silikon sollten die Instrumente 34, 36, 38 beispielsweise mit Kontaflon Nr. 85 ® eingesprüht werden. Auf die Verwendung von Silikonspray sollte verzichtet werden.

Das beschriebene Harntraktmodel gestattet ein Üben aller diagnostischen und therapeutischen in der perkutanen [durch die Haut hindurch] Endourologie angewandten Techniken (starr und flexibel), das fast identisch ist mit dem klinischen Zustand innerhalb des Menschen. Das Model kann einfach und kostengünstig hergestellt werden. Da Organe von geschlachteten Schweinen verwendet werden, spielen weder rechtliche noch ethische Aspekte eine Rolle. Bei einem Vergleich mit einem aus nicht-biologischem Material bestehenden Simulator kommt das Model den menschlichen Gegebenheiten in der klinischen Praxis betreffend Anatomie, "Gewebegefühl" oder Plazieren der Spezialendoprothese deutlich näher.

## Patentansprüche

1. Trainingsmodell (10) zur perkutanen Behandlung von Organen (14, 16),
**dadurch gekennzeichnet,**
**dass** ein oder mehrere präparierte Organe (14, 16) auf einer Grundplatte (12)anatomisch positioniert und in einer ein menschliches Gewebe nachbildenden Vergussmasse (14) eingebettet sind.

2. Trainingsmodell nach Anspruch 1,
**dadurch gekennzeichnet,**
**dass** die präparierten und auf der Grundplatte (12) anatomisch positionierten Organe (14, 16) Nieren sind und dass von freigelegten und isolierten Harnröhren (20, 22) der Nieren (14, 16) jeweils ein Katheter (24, 26) durch die Vergussmasse (18) nach außen führt.

3. Trainingsmodell nach Anspruch 1 oder 2,
**dadurch gekennzeichnet,**
**dass** die Vergussmasse (18) eine Silikonmasse ist.

4. Trainingsmodell nach zumindest einem der vorhergehenden Ansprüche,
**dadurch gekennzeichnet,**
**dass** die Grundplatte (12) aus Silikon besteht.

5. Trainingsmodell nach zumindest einem der vorhergehenden Ansprüche,
**dadurch gekennzeichnet,**
**dass** das Modell (10) quaderförmig ausgebildet ist, wobei sowohl die Grundplatte (12) als auch die Organe (14, 16) vollständig von der Vergussmasse (18) eingeschlossen sind.

6. Trainingsmodell nach zumindest einem der vorhergehenden Ansprüche,
**dadurch gekennzeichnet,**
**dass** die Vergussmasse (18) undurchsichtig ist.

7. Trainingsmodell nach zumindest einem der vorhergehenden Ansprüche,
**dadurch gekennzeichnet,**
**dass** die Vergussmasse (18) transparent ist.
